# FASCICULE DE BREVET EUROPEEN

(11) **EP 3 552 190 B1**
(45) Date de publication et mention de la délivrance du brevet: **16.08.2023**
(21) Numéro de dépôt: 17825750.7
(22) Date de dépôt: 27.11.2017
(51) Int. Cl.: G07F 7/10, G06Q 20/40

(54) **PROCÉDÉ DE SÉCURISATION DE SAISIE DE DONNÉES, TERMINAL DE COMMUNICATION ET PROGRAMME CORRESPONDANT**
VERFAHREN ZUR SICHEREN DATENEINGABE, KOMMUNIKATIONSENDGERÄT UND ZUGEHÖRIGES PROGRAMM
METHOD FOR SECURING DATA INPUT, COMMUNICATION TERMINAL AND CORRESPONDING PROGRAM

(30) Priorité: 09.12.2016 FR 1662269
(43) Date de publication de la demande: 16.10.2019
(73) Titulaire: Banks and Acquirers International Holding, 75015 Paris (FR)
(72) Inventeur: MARCON, Jérôme, 75116 Paris (FR)
(74) Mandataire: Vidon Brevets & Stratégie
(86) Numéro de dépôt international: PCT/EP2017/080500
(87) Numéro de publication internationale: WO 2018/104091

(56) Documents cités:
- EP-A1- 1 600 847
- DE-A1-102010 022 368
- GB-A- 2 438 886
- US-A1- 2016 224 771
- US-B1- 9 196 111

## Description

### 1. Domaine

L'invention se rapporte au traitement de données transactionnelles. L'invention se rapporte plus particulièrement au traitement de données transactionnelles, données qui sont mises en oeuvre dans le cadre d'une opération de paiement. L'invention se rapporte encore plus particulièrement au traitement de données transactionnelles dans le cadre d'une transaction de paiement menée conjointement par un terminal de communication et/ou par un terminal de paiement connecté au terminal de communication.

### 2. Art antérieur

Le paiement en situation de mobilité est un enjeu majeur de développement économique. Pour cette raison, de nombreux industriels proposent des solutions de paiement en mobilité qui sont supposées faciliter la vie de l'utilisateur. Par exemple, de nombreuses solutions existent pour permettre à l'utilisateur d'effectuer des paiements avec son smartphone. Ces solutions sont principalement de deux types : le premier est de permettre au smartphone de réaliser un paiement en ligne, via une application dédiée (ou non) et pour acheter un bien ou un service accessible lui-même par l'intermédiaire d'une application en ligne. Ces solutions se rapprochent, dans leur esprit, des solutions de paiement par carte bancaire accessibles en ligne à partir d'un ordinateur personnel et d'un navigateur internet. De nombreuses solutions de traitement de transactions de paiement ont été proposées dans ce cas de figure.

Le deuxième type se rapporte au paiement, au sein d'un commerce physique, avec son smartphone : à l'aide d'une application dédiée, le smartphone simule le fonctionnement d'une carte bancaire, souvent une carte bancaire sans contact. À nouveau, on ne manque pas de solutions pour effectuer ce type de simulation et de paiement.

En revanche, il existe une problématique quelque peu différente, dans laquelle le commerçant lui-même est en situation de mobilité, ou à tout le moins, une situation dans laquelle le commerçant ne dispose pas de terminal de paiement. Une telle situation se rencontre par exemple pour les commerçants ou les professionnels qui sont en déplacement constant pour leur activité professionnelle : médecins de campagne, professionnels libéraux, chauffeurs privés. Ces professionnels, que nous appelons par extension commerçants, ont besoin de recevoir des paiements de la part de leurs clients mais n'ont pas nécessairement la volonté ou la possibilité de s'équiper d'un terminal de paiement autonome pour recevoir des paiements (par exemple à cause du prix de tels terminaux). Pour cette raison, des solutions alternatives ont été développées, tels que des lecteurs de cartes à connecter sur le smartphone.

Toutes ces solutions permettent donc au commerçant, à l'utilisateur de réceptionner ou d'effectuer un paiement par l'intermédiaire de son terminal mobile (le smartphone) qui fait alors office de terminal de paiement et/ou de caisse enregistreuse. Le problème tient en la relative absence de sécurisation des données de paiement, et notamment des données confidentielles fournies par l'utilisateur telles que le code PIN ("personnal identification number"). En effet, le terminal de communication en lui-même n'est pas nécessairement sécurisé (à la différence d'un terminal de paiement « classique »). Il est donc possible (et probable), qu'un terminal de communication fasse l'objet d'une modification non autorisée, par exemple par un fraudeur, afin de récupérer les données de carte bancaires qui sont utilisées par le terminal de communication pour réaliser les transactions de paiement. Pour effectuer une telle modification non autorisée du terminal de communication, le fraudeur peu par exemple proposer une application, sur un magasin d'applications, cette application ayant des fonctionnalités de base, non frauduleuses, et une fonctionnalité frauduleuse dont l'objectif est de récupérer les données de carte bancaires.

Or, il est très difficile, voire impossible, d'assurer une sécurisation du terminal de communication, et ce pour plusieurs raisons. La première tient à la grande diversité de terminaux de communication présents sur le marché : le nombre de modèles de terminaux est tel qu'il est en pratique impossible de maîtriser les architectures matérielles et logicielles de tous ces terminaux. C'est particulièrement le cas des terminaux dits « chinois », à bas coûts, dont la conception est souvent une copie non optimisée de celle de terminaux existants d'autres constructeurs (de type coréens ou américains) et qui notamment n'intègrent pas d'environnements d'exécution sécurisés, de mémoires sécurisées et de gestion fine d'éléments de sécurisation (« secure element ») (pour des raisons de prix et d'absence de maîtrise technologique). La deuxième raison tient au fait que le terminal de communication est avant toute chose un terminal généraliste, multimédia : il n'a pas pour objet de traiter les données de manière sécurisée. De ce fait, il n'existe aucune restriction quant à l'installation d'applications ou de contenus sur ce terminal.

Ainsi, le risque de vol de données de cartes bancaires est encore plus problématique lorsqu'il s'accompagne du vol du code PIN de ces cartes. En effet, comme exposé précédemment, des dispositifs existants, connectés au smartphone, gèrent un paiement soit en utilisant la bande magnétique soit la carte à puce ou encore une carte sans contact. En règle générale, l'utilisation d'une bande magnétique entraine l'obligation d'effectuer une signature manuscrite pour valider le paiement. Dans ce cas, l'utilisateur utilise un stylet et/ou un doigt pour signer sur l'écran du terminal de communication du commerçant. L'utilisation d'une carte à puce ou d'une carte sans contact nécessite quant à elle l'utilisation d'un code PIN (code d'identification personnel, « personnal identification number ») pour valider la transaction. Pour saisir ce PIN, l'utilisateur utilise un clavier virtuel affiché sur l'écran du terminal de communication pour entrer son PIN. Or, le vol de ce code PIN, conjointement au vol des données de la carte bancaire permet à un fraudeur de réaliser une copie intégrale de la carte de paiement de l'utilisateur (du client) à l'insu de celui-ci et/ou du commerçant. Or, l'affichage du clavier virtuel de saisie du code PIN est géré par une application (de paiement) qui est installée sur le terminal de communication. Plusieurs possibilités de fraude existent ; l'objet de la présente n'est pas de les détailler.

Quoi qu'il en soit, il est périlleux de saisir un code PIN sur une application de paiement exécutée sur un smartphone. Il existe donc des solutions qui consistent à se prémunir d'un vol par interception des données saisies. Il s'agit de présenter, à l'utilisateur, un clavier aléatoire : les chiffres du clavier sont mélangés aléatoirement sur l'écran et l'utilisateur doit effectuer une saisie de son code PIN (ou de toute autre information confidentielle) sur ce clavier aléatoire. Bien que ces solutions aient été largement présentées et exposées, il subsiste cependant un problème important tenant au fait que l'utilisateur qui doit utiliser un tel clavier aléatoire est souvent pris au dépourvu et ne parvient pas nécessairement à utiliser ce clavier. C'est une des raisons pour lesquelles ce type de clavier aléatoire est au final peu utilisé. Il déconcerte les utilisateurs qui sont donc plus ou moins mécontents et ne sont donc pas enclins à utiliser à nouveau ce type de clavier ou l'application qui met en oeuvre ce clavier. DE102010022368 divulgue ainsi un dispositif de contrôle pour l'écran tactile d'un distributeur de billets dont la disposition des touches est déterminée de manière aléatoire à chaque utilisation.

Il existe donc un besoin de proposer une solution qui permette de résoudre le problème susmentionné, au moins en partie.

### 3. Résumé

La présente technique permet de solutionner, au moins en partie, ce problème lié à l'utilisation des claviers aléatoires. Plus particulièrement, il est proposé un procédé selon la revendication 1, un terminal de communication selon la revendication 8, et un produit programme d'ordinateur selon la revendication 9.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée, pour la saisie d'une donnée sensible ;
- la figure 2 présente la saisie dans le cadre d'une transaction ;
- la figure 3 décrit un terminal de communication pour la mise en oeuvre de la méthode de traitement décrite.

### 5. Description

### 5.1. Rappels

Comme exposé précédemment, la présente technique permet d'apporter une solution au problème d'utilisation des claviers virtuels aléatoires utilisés dans les techniques antérieures. Plus particulièrement, il est proposé une Procédé d'affichage d'un clavier non aléatoire, de manière complémentaire à l'affichage du clavier aléatoire.

Ce procédé permet à l'utilisateur déconcerté par l'affichage du clavier aléatoire, de disposer d'un clavier, standard, auquel se référer. On note que le clavier standard est inactif. Il s'agit d'un clavier affiché à titre informatif, permettant à l'utilisateur de se remémorer son code, par exemple son code PIN. L'objectif est de pallier les problématiques posées par la Procédé de mémorisation mise en oeuvre par l'utilisateur. On rappelle qu'un clavier de référence est un clavier respectant les standards d'affichage des touches dans un pays considéré. Un clavier aléatoire est un clavier comprenant un nombre de touches sensiblement identique au nombre de touches d'un clavier standard (de référence), mais dans lequel les touches ont été distribuée de manière pseudo-aléatoire ou aléatoire, selon un processus de tirage d'un ou plusieurs nombre et de répartition des touches en fonction de ce nombre ; un tel processus ne fait pas l'objet du présent document. Éventuellement, quelques touches du clavier aléatoire peuvent être disposées de la même manière que le clavier de référence. Il peut s'agir, par exemple pour un pinpad, des touches correction, annulation et validation, qui sont généralement situées sur la rangée inférieure de touches du clavier.

L'invention est intrinsèquement liée à un problème mis en évidence par les inventeurs, et qui trouve son origine dans les processus cognitifs et mémoriels mis en oeuvre par les utilisateurs pour se remémorer les divers mots de passes et codes confidentiels qui sont devenus monnaie courante dans notre vie quotidienne. Ainsi, par exemple, la mémorisation des codes PIN, tels que les code de cartes bancaires, passe beaucoup par la mémorisation d'un geste, réalisé de manière plus ou moins automatique (en fonction des personnes). En ce sens, l'invention peut être qualifiée d'invention de problème. Plus particulièrement, le problème mis à jour par les inventeurs, et qui intervient dans le rejet des utilisateurs vis à vis des claviers virtuels, est qu'une grande majorité des utilisateurs mémorise avant tout le geste, réalisé par la main, lors de la saisie du code PIN ou d'un mot de passe. Ce geste, sorte de réflexe, est mis en oeuvre bien avant que l'utilisateur ne se remémore les caractères (chiffres, lettres) qui composent ce code PIN ou ce mot de passe. Dès lors, lorsqu'un clavier aléatoire est présenté à l'utilisateur, le premier réflexe de celui-ci est de débuter la frappe selon le schéma de frappe de réflexe correspondant à un clavier traditionnel. Un tel reflexe provoque invariablement la saisie d'un code erroné, ce qui a pour conséquence de décontenancer l'utilisateur ou à tout le moins de le rendre peu satisfait.

Or, comme cela a été exposé précédemment, l'utilisation d'un clavier aléatoire est nécessaire, et ce dans l'objectif de répondre à des impératifs de sécurité. La technique mise au point par les inventeurs consiste donc à apporter, à l'utilisateur, l'information lui permettant d'intégrer plus rapidement le fait que le code PIN ou le mot de passe doit être saisi avec attention (c'est à dire en se remémorant les chiffres et/ou caractères qui le compose et non pas uniquement, par réflexe de saisie). Cet apport d'information est réalisé, d'une manière générale, en présentant un clavier non aléatoire (standard, appelé clavier de référence) à l'utilisateur. L'affichage de ce clavier standard permet à l'utilisateur de se remémorer le code ou le mot de passe à saisir, en effectuant mentalement (ou physiquement) le geste qu'il aurait effectué sur ce clavier standard : l'utilisateur est ainsi plus à même de se souvenir des chiffres ou des lettres et de leur ordre.

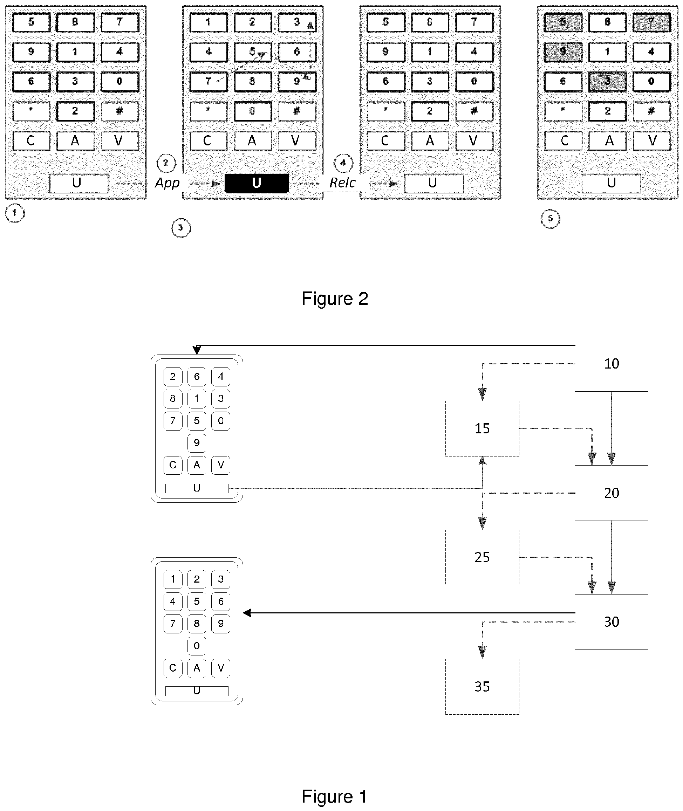

On présente, en relation avec la figure 1, le principe général de la Procédé proposée, Procédé implémentée par un processeur d'un terminal de communication au cours d'une opération de sécurisation comprenant la saisie d'un code confidentiel, Procédé qui comprend :
- une étape d'affichage (10) d'un clavier aléatoire pour la saisie du code confidentiel ;
- une étape de réception (20), par le processeur, d'un signal d'affichage d'un clavier de référence ;
- une étape d'affichage (30) du clavier de référence, ledit clavier de référence étant inactif.

Selon une caractéristique complémentaire, dans un mode de réalisation, l'étape d'affichage du clavier de référence est précédée d'une étape de masquage (25) du clavier aléatoire.

Selon une caractéristique complémentaire, dans un mode de réalisation, l'étape de réception (20), par le processeur, du signal d'affichage d'un clavier de référence, est précédée d'une étape d'appui (15) sur une touche située à un emplacement prédéterminé du terminal de communication, qui entraine la transmission du signal d'affichage du clavier de référence au processeur.

Selon une caractéristique complémentaire, dans un mode de réalisation, l'étape d'affichage (30) du clavier de référence prend fin (35) lors de l'interruption du signal d'affichage.

Ainsi, comme explicité précédemment, en fonction des modes de réalisation, le clavier non aléatoire peut être affiché en substitution du clavier aléatoire (il vient prendre la place du clavier aléatoire sur l'affichage) ou en sus du clavier aléatoire (il s'ajoute au clavier aléatoire sur l'affichage). Ce clavier "aide-mémoire", est inactif. Il présente l'avantage, par cette inactivité, d'assurer que même si l'utilisateur saisi son code ou mot de passe sur ce clavier, ses saisies ne peuvent être "interceptées" et fournir de l'information à l'éventuel attaquant.

Dans un mode de réalisation de base, le clavier standard est affiché sous la forme d'une image, présentée à l'utilisateur à la demande de celui-ci. Plus particulièrement, pour afficher cette image de clavier standard, l'utilisateur appuie sur une touche prédéterminée (ou sur un emplacement prédéterminé de l'écran), permettant d'afficher le clavier standard, qui vient occulter le clavier aléatoire. Dans ce mode de réalisation de base, la durée de l'affichage est réglable : par exemple, l'affichage peut être défini pour un temps donné (cinq secondes, dix secondes) ou alors dépendre d'une action de l'utilisateur (tant que l'utilisateur souhaite voir le clavier de référence, celui-ci est affiché).

Une autre caractéristique se rapporte à la taille du clavier de référence. L'affichage du clavier de référence est, selon une première variante, le même que celui du clavier aléatoire : la taille du clavier est identique, les touches sont identiques : seuls les emplacements des touches changent.

Selon une deuxième variante, l'affichage du clavier de référence est différent de l'affichage du clavier aléatoire : le clavier de référence est affiché avec une taille réduite (par rapport à celle du clavier aléatoire). Cela peut être dû à deux facteurs : le premier facteur tient au fait qu'en plus du clavier de référence, un message d'information est présenté à l'utilisateur, ce message délivrant à l'utilisateur l'information selon laquelle le clavier de référence est inactif et qu'il permet uniquement de se remémorer le code confidentiel ; ainsi, cette variante peut être mise en oeuvre sur un écran tactile de taille réduite. Le deuxième facteur tient au fait que le clavier de référence et le clavier aléatoire peuvent être affichés conjointement. Or on souhaite faire comprendre à l'utilisateur que le clavier de référence est inactif. Ainsi, le clavier de référence est affiché en taille réduite par rapport au clavier aléatoire, en haut à gauche, ou au centre ou à droite du clavier aléatoire. Dans ce dernier cas, l'utilisateur peut requérir l'affichage de ce clavier de référence, mais ce n'est pas une obligation. Lorsque la taille de l'écran le permet, le clavier de référence peut être affiché directement, sans requête de l'utilisateur.

Une autre caractéristique se rapporte à l'occultation du clavier aléatoire par le clavier de référence. En effet, on souhaite activer le processus de mémorisation de l'utilisateur et donc permettre une saisie plus simple du code confidentiel ou du mot de passe. Pour ce faire, on va faciliter le processus de création d'une schéma mental de frappe du code ou du mot de passe en faisant varier, avec le temps, l'occultation du clavier aléatoire par le clavier de référence. Cette caractéristique s'applique bien entendu au cas où l'image du clavier de référence occulte le clavier aléatoire. Selon cette caractéristique, le pourcentage d'occultation varie en fonction du temps : par exemple sur une période de 10 secondes d'affichage de l'image du clavier de référence, une fonction de transfert (par exemple de type sigmoïde ou encore une fonction affine) est utilisée pour faire varier le pourcentage d'occultation d'une valeur 100% à par exemple 0%. L'utilisateur peut alors, progressivement, mémoriser le schéma mental qu'il doit accomplir sur le clavier aléatoire à partir du schéma mental qu'il connaît, du clavier de référence.

Une autre caractéristique selon l'invention se rapporte au clavier aléatoire lui-même : afin de sécuriser encore plus le processus de saisie du code, et ce lorsque l'affichage du clavier de référence occulte le clavier aléatoire, le procédé comprend, au moment de la réapparition du clavier aléatoire, une étape de calcul (ou de détermination), d'un nouveau clavier aléatoire, différent du clavier aléatoire qui était affiché avant l'occultation.

Une autre caractéristique se rapporte au clavier aléatoire lui-même : selon la présente, ce clavier aléatoire présente une forme différente de celle du clavier de référence. Ainsi, dans un mode de réalisation, tandis que le clavier de référence est de forme globalement rectangle (particulièrement pour un pinpad), le clavier aléatoire, quant à lui présente plutôt une forme circulaire, proche de celle d'un cadran, dans lequel les touches numériques sont distribuées aléatoirement. Ceci présente l'avantage, pour l'utilisateur, de ne pas pouvoir confondre le clavier de référence et la clavier aléatoire.

### 5.2. Description d'un mode de réalisation

Le mode de réalisation présentement décrit s'adresse aux cas dans lesquels l'utilisateur saisit, sur un terminal de communication comprenant un écran tactile, un code d'authentification personnel (code PIN) pour la validation d'une transaction de paiement, cette transaction étant au moins en partie mise en oeuvre par le terminal de communication. La technique est plus particulièrement mise en oeuvre au moment de la saisie du code PIN, lors d'une transaction financière impliquant, pour un utilisateur, la saisie d'un tel code PIN pour valider cette transaction, et est décrite en relation avec la figure 2. Cette saisie se déroule comme suit :
- une étape d'affichage (1) d'un clavier aléatoire, clavier du type comprenant quinze touches (dix touches numériques, une touche de correction, une touche d'annulation et une touche de validation, * et #) ; dans ce mode de réalisation, le clavier comprend également d'une touche d'activation (U) d'affichage du clavier de référence ;
- pour se souvenir de son code l'utilisateur appuie (2)(App), sur la touche d'activation (U) d'affichage du clavier de référence, qui provoque l'apparition de l'image du clavier de référence en occultant le clavier aléatoire ;
- l'utilisateur se souvient alors mentalement de son code (3) ; l'image du clavier de référence reste affichée tout au long de l'appui sur la touche d'activation (U) ;
- lorsque l'utilisateur relâche (4)((Relc) la touche d'activation, le clavier aléatoire réapparait ;
- l'utilisateur peut alors saisir (5) le code PIN dont il s'est souvenu avec l'apparition du clavier de référence.

La touche d'activation peut être une touche affichée sur l'écran tactile du terminal de communication ou bien une touche physique du terminal de communication (par exemple touche "home" par exemple) ;

Ainsi, dans ce mode de réalisation, le clavier de référence ne reste affiché que le temps de l'appui réalisé par l'utilisateur. Cet affichage (temporaire) a pour effet de contraindre l'utilisateur à maintenir l'appui sur le bouton d'activation pour continuer à pouvoir visualiser l'image du clavier de référence. L'objectif de cette contrainte est d'éviter que le clavier de référence n'induise l'utilisateur en erreur en lui faisant croire qu'il est possible de saisir son code PIN sur ce clavier de référence. Le fait qu'il conserve un doigt appuyé sur le bouton d'activation empêche, presque mécaniquement, d'effectuer une saisie de code.

Lors de l'affichage du clavier de référence, l'utilisateur peut se remémorer son code, à l'aide du geste mental de saisie du code sur le clavier standard : on suppose alors que l'utilisateur se souvient des chiffres qui composent son code lors de la visualisation du clavier de référence et qu'il est ainsi ce code en mémoire lorsqu'il relâche le bouton d'activation et que le clavier aléatoire est à nouveau présenté.

Dans ce mode de réalisation, il n'y a pas de limitation au nombre de fois où l'opération d'affichage du clavier de référence peut être effectué. Cependant, en fonction des conditions de mises en oeuvre opérationnelles, le nombre d'itération du processus peut être limité, notamment de par la nécessité de mettre en oeuvre une transaction dans un temps imparti.

Ainsi, dans ce mode de réalisation, l'utilisateur se voit présenter, à sa demande, une image d'un clavier numérique standard, de référence, qui vient masque le clavier aléatoire.

### 5.3. Autres caractéristiques et avantages

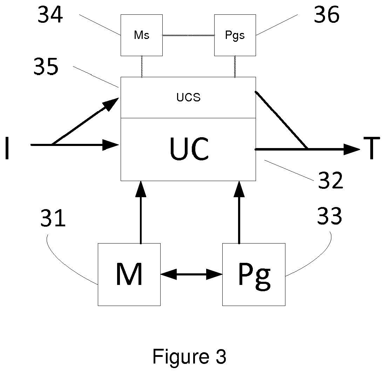

On décrit, en relation avec la figure 3, un terminal de communication mis en oeuvre pour gérer, la saisie de données sensibles, selon le procédé décrit préalablement.

Par exemple, le terminal de communication comprend une mémoire 31 comprenant par exemple une mémoire tampon, un processeur de traitement général 32, équipée par exemple d'un microprocesseur, et pilotée par un programme d'ordinateur 33, et/ou une mémoire sécurisée 34, un processeur de traitement sécurisé 35, pilotée par un programme d'ordinateur 36, ces unités de traitement mettant en oeuvre des procédés de traitement et de saisie de données tels que décrits précédemment pour effectuer un affichage d'un clavier de référence (standard), par exemple sous la forme d'une image, afin de permettre à l'utilisateur de se remémorer son code.

À l'initialisation, les instructions de code du programme d'ordinateur 36 sont par exemple chargées dans une mémoire avant d'être exécutées par le processeur de traitement sécurisé 35. Le processeur de traitement 35 reçoit en entrée au moins une donnée représentative d'une nécessité de saisie d'une donnée sensible. Le processeur de traitement sécurisé 35 met en oeuvre les étapes du procédé de traitement, selon les instructions du programme d'ordinateur 36 pour afficher un clavier aléatoire et permettre l'affichage d'une image représentative d'un clavier standard (de référence)) auquel l'utilisateur peut se rattacher pour se souvenir de son code.

Pour cela, le terminal de communication comprend, outre la mémoire 34, des moyens de communications, tels que des modules de communication réseau, des moyens de transmission de donnée et des circuits de transmission de données entre les divers composants du terminal de communication.

Les moyens précédemment décrits peuvent se présenter sous la forme d'un processeur particulier implémenté au sein d'un terminal, tel qu'un terminal de paiement. Selon un mode de réalisation particulier, le terminal de communication met en oeuvre une application particulière qui est en charge de la réalisation des opérations précédemment décrites, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

## Revendications

1. Procédé de sécurisation de saisie de données sensibles, procédé mise en oeuvre par un terminal de communication comprenant un processeur de traitement, un écran de saisie tactile sur lequel la saisie des données sensibles est réalisée, procédé comprenant :
- une étape d'affichage (10) d'un premier clavier aléatoire pour la saisie du code confidentiel ;
- une étape de réception (20), par le processeur, d'un signal d'affichage d'un clavier de référence ;
- une étape d'affichage (30) du clavier de référence, ledit clavier de référence occultant ledit premier clavier aléatoire, ledit clavier de référence étant inactif ;
l'étape de réception (20), par le processeur, du signal d'affichage d'un clavier de référence, étant précédée d'une étape d'appui (15) sur une touche située à un emplacement prédéterminé du terminal de communication, entraînant la transmission du signal d'affichage du clavier de référence au processeur, ledit affichage du clavier de référence étant interrompu lors de l'interruption de l'appui sur la touche et/ou à l'issue de l'écoulement d'un temps déterminé,
ledit procédé comprenant en outre, lorsque ledit affichage du clavier de référence est interrompu, une étape de détermination et d'affichage d'un deuxième clavier aléatoire pour la saisie du code confidentiel, différent du premier clavier aléatoire.

2. Procédé selon la revendication 1, **caractérisé en ce que** l'étape d'affichage du clavier de référence est précédée d'une étape de masquage (25) du premier clavier aléatoire.

3. Procédé selon la revendication 1, **caractérisé en ce que** l'étape (30) du clavier de référence prend fin (35) lors de l'interruption du signal d'affichage.

4. Procédé selon la revendication 3, **caractérisé en ce que** l'interruption du signal d'affichage intervient lors de l'interruption de l'appui sur ladite touche.

5. Procédé selon l'une quelconque des revendications 1 à 4, **caractérisé en ce que** ledit clavier de référence est affiché sur ledit écran tactile dudit terminal de communication sous la forme d'une image représentative d'un clavier de référence.

6. Procédé selon la revendication 5, **caractérisé en ce que** la taille de l'image représentative du clavier de référence est inférieure à la taille du premier clavier aléatoire.

7. Procédé selon l'une quelconque des revendications 1 à 6, **caractérisé en ce que** ledit premier clavier aléatoire présente une forme différente dudit clavier de référence.

8. Terminal de communication comprenant des moyens de sécurisation de saisie de données sensibles et comprenant un processeur de traitement, un écran de saisie tactile sur lequel la saisie des données sensibles est réalisée, terminal **caractérisé en ce qu'**il comprend :
- des moyens d'affichage d'un premier clavier aléatoire pour la saisie du code confidentiel ;
- des moyens d'appui sur une touche située à un emplacement prédéterminé du terminal de communication, l'activation de ces moyens entraînant la transmission d'un signal d'affichage d'un clavier de référence au processeur ;
- des moyens de réception, par le processeur, du signal d'affichage du clavier de référence ;
- des moyens d'affichage du clavier de référence, ledit clavier de référence occultant ledit premier clavier aléatoire, ledit clavier de référence étant inactif, ledit affichage étant interrompu, par le processeur, lors de l'interruption de l'appui sur la touche et/ou à l'issue de l'écoulement d'un temps déterminé ;
- des moyens de détermination et d'affichage d'un deuxième clavier aléatoire pour la saisie du code confidentiel, différent du premier clavier aléatoire, lesdits moyens étant mis en oeuvre lorsque ledit affichage du clavier de référence est interrompu.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de traitement selon la revendication 1 à 7, lorsqu'il est exécuté par un processeur.

## Patentansprüche

1. Verfahren zur sicheren Eingabe sensibler Daten, Verfahren, das von einem Kommunikationsendgerät, umfassend einen Verarbeitungsprozessor, einen Eingabe-Touchscreen, an dem die Eingabe der sensiblen Daten durchgeführt wird, eingesetzt wird, wobei das Verfahren umfasst:
- einen Schritt der Anzeige (10) einer ersten Zufallstastatur für die Eingabe des Geheimcodes;
- einen Schritt des Empfangs (20) eines Anzeigesignals einer Referenztastatur durch den Prozessor,
- einen Schritt der Anzeige (30) der Referenztastatur, wobei die Referenztastatur die erste Zufallstastatur verdeckt, wobei die Referenztastatur inaktiv ist;
wobei vor dem Schritt des Empfangs (20) eines Anzeigesignals einer Referenztastatur durch den Prozessor ein Schritt des Drückens (15) auf eine Taste erfolgt, die sich an einer vorbestimmten Stelle des Kommunikationsendgeräts befindet, der zur Übertragung des Anzeigesignals der Referenztastatur an den Prozessor führt, wobei die Anzeige der Referenztastatur bei einer Unterbrechung des Drückens auf die Taste und/oder nach Ablauf einer bestimmten Zeit unterbrochen wird,
wobei das Verfahren ferner, wenn die Anzeige der Referenztastatur unterbrochen ist, einen Schritt der Bestimmung und Anzeige einer zweiten Zufallstastatur für die Eingabe des Geheimcodes, die sich von der ersten Zufallstastatur unterscheidet, umfasst.

2. Verfahren nach Anspruch 1, **dadurch gekennzeichnet, dass** vor dem Schritt der Anzeige der Referenztastatur ein Schritt der Verdeckung (25) der ersten Zufallstastatur erfolgt.

3. Verfahren nach Anspruch 1, **dadurch gekennzeichnet, dass** der Schritt (30) der Referenztastatur bei der Unterbrechung des Anzeigesignals endet (35).

4. Verfahren nach Anspruch 3, **dadurch gekennzeichnet, dass** die Unterbrechung des Anzeigesignals bei der Unterbrechung des Drückens auf die Taste stattfindet.

5. Verfahren nach einem der Ansprüche 1 bis 4, **dadurch gekennzeichnet, dass** die Referenztastatur auf dem Touchscreen des Kommunikationsendgeräts in Form eines für eine Referenztastatur repräsentativen Bildes angezeigt wird.

6. Verfahren nach Anspruch 5, **dadurch gekennzeichnet, dass** die Größe des für die Referenztastatur repräsentativen Bildes kleiner als die Größe der ersten Zufallstastatur ist.

7. Verfahren nach einem der Ansprüche 1 bis 6, **dadurch gekennzeichnet, dass** die erste Zufallstastatur eine zur Referenztastatur unterschiedliche Form aufweist.

8. Kommunikationsendgerät, umfassend Mittel zur sicheren Eingabe von sensiblen Daten und umfassend einen Verarbeitungsprozessor, einen Touchscreen, an dem die Eingabe der sensiblen Daten durchgeführt wird, wobei das Endgerät **dadurch gekennzeichnet ist, dass** es umfasst:
- Mittel zur Anzeige einer ersten Zufallstastatur für die Eingabe des Geheimcodes;
- Mittel zum Drücke3n auf eine Taste, die sich an einer vorbestimmten Stelle des Kommunikationsendgeräts befindet, wobei die Aktivierung dieser Mittel zur Übertragung eines Anzeigesignals einer Referenztastatur an den Prozessor führt;
- Mittel zum Empfang des Anzeigesignals der Referenztastatur durch den Prozessor;
- Mittel zur Anzeige der Referenztastatur, wobei die Referenztastatur die erste Zufallstastatur verdeckt, wobei die Referenztastatur inaktiv ist, wobei die Anzeige durch den Prozessor bei Unterbrechung des Drückens auf die Taste und/oder nach Ablauf einer bestimmten Zeit unterbrochen wird;
- Mittel zur Bestimmung und Anzeige einer zweiten Zufallstastatur für die Eingabe des Geheimcodes, die sich von der ersten Zufallstastatur unterscheidet, wobei die Mittel eingesetzt werden, wenn die Anzeige der Referenztastatur unterbrochen wird.

9. Computerprogrammprodukt, das von einem Kommunikationsnetz heruntergeladen und/der auf einem von einem Computer lesbaren Träger gespeichert und/oder von Mikroprozessor ausgeführt werden kann, **dadurch gekennzeichnet, dass** es Programmcodebefehle für die Ausführung eines Verarbeitungsverfahrens nach Anspruch 1 bis 7, wenn es von einem Prozessor ausgeführt wird, umfasst.

## Claims

1. Method for securing the entry of sensitive data, the method being implemented by a communications terminal comprising a processor, an entry touchpad screen on which the entry of sensitive data is carried out, method comprising:
- a step of display (10) of a first random keypad for the entry of a confidential code;
- a step of reception (20), by the processor, of a reference pad display signal;
- a step of display (30) of the reference keypad, said reference keypad concealing said first random keypad, said reference keypad being inactive;
the step of reception (20), by the processor, of the reference pad display signal being preceded by a step for pressing (15) on a key situated at a pre-determined location of the communications terminal, leading to the transmission of the reference keypad display signal to the processor, said display of the reference keypad being interrupted at the interruption of the pressing on said key and/or at the end of a specified period of time,
said method further comprising, when said display of the reference keypad is interrupted, a step of determining and displaying a second random keypad for the entry of the confidential code, different from the first random keypad.

2. Method according to claim 1, **characterized in** the step of display of the reference keypad is preceded by a step for masking (25) the first random keypad.

3. Method according to claim 1, **characterized in that** the step of display (30) of the reference keypad ends (35) at the interruption of the display signal.

4. Method according to claim 3, **characterized in that** the interruption of the display signal takes place at the interruption of the pressing on said key.

5. Method according to any one of the claims 1 to 4, **characterized in that** said reference keypad is displayed on said touchpad screen of said communications terminal in the form of an image representing a reference keypad.

6. Method according to claim 5, **characterized in that** the size of the image representing the reference keypad is smaller than the size of the first random keypad.

7. Method according to any one of the claims 1 to 6, **characterized in that** said first random keypad has a shape different from that of said reference keypad.

8. Communications terminal comprising means for securing the entry of sensitive data and comprising a processor, an entry touchpad screen on which the entry of sensitive data is carried out, terminal **characterized in that** it comprises:
- means for displaying a first random keypad for the entry of the confidential code;
- means for pressing on a key situated at a pre-determined location of the communication terminal, the activation of said means leading to the transmission of a reference pad display signal to the processor;
- means of reception, by the processor, of the reference pad display signal;
- means of display of the reference keypad, said reference keypad concealing said first random keypad, said reference keypad being inactive, said display of the reference keypad being interrupted, by the processor, at the interruption of the pressing on said key and/or at the end of a specified period of time;
- means for determining and displaying a second random keypad for the entry of the confidential code, different from the first random keypad, said means being implemented, when said display of the reference keypad is interrupted.

9. Computer program product downloadable from a communications network and/or stored on a computer-readable medium and/or executable by a microprocessor **characterized in that** it comprises program code instructions for the execution of a method of processing according to claims 1 to 7, when it is executed by a processor.
